# EUROPÄISCHE PATENTSCHRIFT

(11) **EP 1 897 651 B1**
(45) Veröffentlichungstag und Bekanntmachung des Hinweises auf die Patenterteilung: **16.02.2011**
(21) Anmeldenummer: 07022656.8
(22) Anmeldetag: 07.08.2002
(51) Int. Cl.: B23K 35/36

(54) **Flussmittelzusammensetzung zum Hartlöten von Teilen, insbesondere auf der Basis von Aluminium als Grundmaterial, sowie deren Verwendung**
Flux composition for brazing of parts, in particular with aluminum as base material, and use thereof
Composition de flux au brasage des pièces, en particulièr a base d'aluminium, et utilisation

(30) Priorität: 28.08.2001 DE 10141883
(43) Veröffentlichungstag der Anmeldung: 12.03.2008
(62) Teilanmeldung aus: 02017571.7
(73) Patentinhaber: Behr GmbH & Co. KG, 70469 Stuttgart (DE)
(72) Erfinder: Englert, Peter, Dipl.-Ing.(FH), 74177 Bad Friedrichshall (DE); Trautwein, Ingo, 74321 Bietigheim-Bissingen (DE); Skiba, Erwin, Dipl.-Ing., 70563 Stuttgart (DE)
(74) Vertreter: Grosse, Rainer

(56) Entgegenhaltungen:
- EP-A1- 0 936 024
- EP-A2- 0 980 738
- EP-A2- 1 127 653
- WO-A-2004/113014
- WO-A1-96/37336
- DE-A1- 2 614 872
- DE-A1- 10 114 191
- DE-A1-102004 049 107
- US-A- 3 708 449
- US-A- 4 981 526
- US-A- 5 064 482
- US-A- 5 806 752
- US-B1- 6 220 501

## Beschreibung

Die Erfindung betrifft eine Hartlöt-Flussmittelzusammensetzung nach dem Oberbegriff des Anspruchs 1.

Zum Hartlöten lotplattierter Einzelteile für Wärmetauscher, das heißt insbesondere von Kühlern wie sie in der Automobilbranche verwendet werden, ist es bei Verwendung von Aluminium beziehungsweise Aluminiumlegierungen als Grundmaterial derzeit üblich, spezielle Lötverfahren einzusetzen, insbesondere das so genannte NOCOLOK®-Löten. Dieses ist im Grundsatz in der DE-OS 26 14 872 als ein Verfahren zum Verbinden von Aluminiumkomponenten mit einer Aluminiumlötlegierung mit einem Schmelzpunkt unter dem der Aluminiumkomponenten, durch Erwärmen der zusammengesetzten Komponenten auf eine Temperatur über dem Schmelzpunkt der Lötlegierung und unter dem Schmelzpunkt der Komponenten in Anwesenheit eines Kaliumfluoaluminatschmelzmittels, das im Wesentlichen frei von nichtumgesetztem KF ist, beschrieben. Dieses bekannte Verfahren ist dadurch gekennzeichnet, dass das Schmelzmittel und die Lötlegierung auf die Oberflächen von mindestens einer der Komponenten als wässrige Aufschlämmung aus feinverteiltem Schmelzmittel und Metallpulver aufgetragen werden, der Aufschlämmungsfilm getrocknet wird und die Komponenten durch Erwärmen in einer trockenen, sauerstofffreien Inertgasatmosphäre (gegebenenfalls nach dem Zusammensetzen) verlötet werden, wobei die Anwendung der Schmelzmitel/Lötlegierungsaufschlämmung so gesteuert wird, dass 40 bis 150 g/m² angewendet werden und das Verhältnis von Schmelzmittel zu Lötlegierung so ausgewählt wird, dass mindestens 5 g/m² Schmelzmittel abgeschieden werden.

Wegen der speziellen Materialeigenschaften des Aluminiums beziehungsweise der Aluminiumlegierungen ist bei dem genannten Lötverfahren das Aufbringen eines nicht korrosiven, nicht hygroskopischen Flussmittels notwendig. Beim NOCOLOK®-Löten wird dafür ein Flussmittel auf der Basis von Kaliumfluoaluminat mit der Summenformel K₍₁₋₃₎AlF₍₄₋₆₎ verwendet. Dieses Flussmittel liegt als Eutektikum vor, schmilzt bei einer Temperatur von 562 °C bis 572 °C und entfernt das auf dem Aluminium als solchem stets als O-berflächenverunreinigung vorhandene Aluminiumoxid. Dadurch wird für kurze Zeit die Oberfläche des A1-Materials weiteren Bearbeitungsschritten wie dem Hartlöten zugänglich gemacht, was man fachsprachlich auch mit "Aktivierung der Oberfläche" bezeichnet.

Das vorstehend erwähnte nicht hygroskopische Flussmittel benetzt die Oberfläche und das Lot kann, wenn die Lotplattierung bei einer Temperatur von 577 °C zu schmelzen beginnt, durch Kapillarwirkung frei in die Lötspalte gezogen werden. Ohne einen der Lötsituation angemessenen Flussmittelauftrag ist also keine fertigungssichere, Komplettdicht-Lötung möglich.

Üblicherweise wird das genannte Flussmittel auf folgende Arten aufgebracht, was fachsprachlich als Befluxung bezeichnet wird:
a) Indem flächig als wässrige Suspension aufgesprüht wird, gefolgt von Ausblasen der Netze und anschließende Trocknung;
b) indem eine wässrige Suspension aufgepinselt wird, gefolgt von anschließender Trocknung;
c) indem das Flussmittel lokal mittels einer Kanüle als pastöse Suspension in verschiedenen Glykolen und/oder Glykolethern aufgetragen wird, gefolgt von anschließender Trocknung.

Die verschiedenen Varianten des Aufbringen des Flussmittels kommen bei unterschiedlichen Vorrichtungen zum Einsatz. Die mit a) bezeichnete Variante wird hauptsächlich bei der Befluxung von Wärmetauschernetzen und bei der Wellrippen/Rohr-Verlötung angewandt. Dies erfolgt automatisch mittels sogenannter "Sprühbefluxungseinrichtungen". Die mit b) bezeichnete Variante dient der gezielten Befluxung von beispielsweise gesteckten Kondensator-Trennwänden. Die mit c) bezeichnete Variante wird zur gezielten Innenbefluxung von beispielsweise Heizkörperböden, Trennwänden und Steckgabelkupplungen sowie zur Nachbefluxung von Rohr-Boden-Verbindungen aller Wärmetauschertypen vor dem Löten angewandt. Dies geschieht manuell mittels Kanüle durch einen Fachmann auf der Beschickungsfördereinrichtung des Lötofens und ist entsprechend lohnintensiv.

In der laufenden Fertigung treten bei allen diesen drei beschriebenen Varianten der Flussmittelapplikation die folgenden Probleme auf: Beim Innenbefluxen der vormontierten Trennwände besteht die Gefahr, dass Flussmittel in den Trocknerpatronenbereich läuft und die Funktion gefährdet wird. Eine Einzelteilbefluxung der Trennwände ist auf Grund mangelnder Haftfestigkeit der herkömmlichen Flussmittelsuspension nicht praktikabel, die entsprechenden Teile sind nicht handhabbar. Bei der mit c) bezeichneten Variante treten Probleme durch übermäßigen oder undefinierten Flussmittelauftrag auf die Bodendicke beziehungsweise auf die Trennwände/Steckgabelkupplungen, Innenrohrverbindungen und so weiter auf, die sich darin äußern, dass entweder Lötstellen nicht ausreichend befluxt sind oder der Flussmittelüberschuss bei nicht maßhaltigen Fügespalten den Spalt schließt und so eine Dichtheit des Wärmetauschers vorgetäuscht wird, obwohl keine Lötung erfolgt ist.

Des Weiteren ergeben sich aus einer eventuell erforderlichen manuellen Nachbefluxung hohe Lohnkosten. Für die Nachbefluxung der Rohr/Bodenverbindung mittels Fluxpaste beziehungsweise dem vorstehend erwähnten Flussmittel oder der Flussmittelzusammensetzung wird pro Schicht und Ofenlinie eine volle Arbeitskraft benötigt. Außerdem ist bei Nachbefluxung im Sammelrohrbereich die Zugänglichkeit stark eingeschränkt, insbesondere bei Nachbefluxung im Bereich zwischen Kondensator und Kühlmittel/Luft-Wärmetauscher Des Weiteren kommt es generell zu Verschmutzungsproblemen, insbesondere durch exzessiven Flussmittelauftrag, besonders beim Nachbefluxen, was hohe Reinigungskosten für Lötlehren, Ofenketten und Ofenmuffeln verursacht, was durch sparsameren Auftrag, der bei der derzeitig angewandten Technologie nicht möglich ist, minimiert werden könnte.

Zusätzlich ergibt sich bei der Verwendung des vorstehend genannten Flussmittels beziehungsweise auch bei der Verwendung anderer im Stand der Technik wie etwa beim "CAB" [= controlled atmosphere brazing] üblicher Flussmittel das Problem, dass das zu beschichtende Material in Form von großen sogenannten Coils angeliefert wird, aus denen dann erst ein Formteil im Zuge eines Formgebungsschritts geformt wird, woran sich das Befluxen mit dem Flussmittel anschließt. Der Grund für diese komplizierte Vorgehensweise ist darin zu sehen, dass es den herkömmlichen Flussmitteln an Haftfestigkeit auf der mit Aluminiumoxid verunreinigten Oberfläche des Aluminiummetalls fehlt, weshalb das Flussmittel eben erst nach dem Formgebungsschritt auf das fertige Formteil aufgebracht wird.

Neben dem vorstehend beschriebenen Nachteil in Bezug auf die Kosten sind auch die durch die Befluxung hervorgerufenen Verschmutzungsprobleme unter Umweltgesichtspunkten bedenklich.

Aus der EP A1-0936024 geht eine Hartlöt-Flussmittelzusammensetzung gemäß dem Oberbegriff des Anspruchs 1 hervor. Aus der WO 96/37336 A1 geht eine Hartlöt-Flussmittelzusammensetzung zum Löten von Aluminium hervor, bei der eine Polymerverbindung vorliegt, die ein Alkenoxid, ein Flussmittel mit Fluorverbindung sowie Wasser aufweist.

Die beschriebenen Probleme werden erfindungsgemäß dadurch gelöst, dass eine Hartlöt-Flussmittelzusamznensetzung gemäß Anspruch 1 bereitgestellt wird.

Bei der Erfindung werden unter dem Begriff Flussmittel insbesondere "fertige Flussmittel" verstanden, das heißt also Flussmittel, die neben dem eigentlichen Flussmittel im engeren Sinne noch zumindest eine Zusatzkomponente enthalten. Insofern kann es sich bei dem erfindungsgemäßen Flussmittel wiederum um Zusammensetzungen handeln.

Die zumindest eine Zusatzkomponente ist bevorzugt ein Metall, stärker bevorzugt ein pulverförmiges Metall. Noch stärker bevorzugt ist das Metall ausgewählt aus der Gruppe, bestehend aus Aluminium und Silicium, insbesondere pulverförmiges Silicium wie es etwa in dem Flussmittel "Silflux" (hergestellt und vertrieben von der Firma Solvay) enthalten ist, oder Al-Hartlot.

Hierbei und im Folgenden wird die Formulierung "ausgewählt aus der Gruppe, bestehend aus ..." verwendete um anzuzeigen, dass auch Mischungen der jeweils aufgezählten Einzelbestandteile verwendet werden können.

Außerdem stellt die Erfindung zur Lösung der Aufgabe ein Verfahren zur Herstellung der erfindungsgemäßen Flussmittelzusammensetzung bereit, eine Verwendung der Hartlöt-Flussmittelzusammensetzung zum Herstellen beschichteter Formteile, insbesondere beschichteter Formteile für den Automobilbau auf der Basis von Al und/oder Al-Legierungen, unter Einsatz der erfindungsgemäßen Flussmittelzusammensetzung, eine die erfindungsgemäße Flussmittelzusammensetzung enthaltende Hartlotbeschichtung sowie ein Hartlötverfahren zum Herstellen verbundener Formteile auf der Basis von Aluminium oder Aluminiumlegierungen, wobei das Verfahren die Schritte umfasst, dass erfindungsgemäß hergestellte beschichtete Formteile mittels Hartlöten verbunden werden, und Verfahren zum Herstellen von mit der erfindungsgemäßen Flussmittelzusammensetzung beschichteten Formteilen, umfassend die Schritte, dass ein Rohteil wie etwa ein Blech oder Coil mit der erfindungsgemäßen Flussmittelzusammensetzung unter Erhalt eines beschichteten Rohteils beschichtet wird und aus diesem beschichteten Rohteil ein Formteil gebildet wird, bereit.

Bevorzugterweise ist das Bindemittel in der Flussmittelzusammensetzung ausgewählt aus der Gruppe, bestehend aus chemisch und/oder physikalisch trocknenden organischen Polymeren. Noch stärker bevorzugt werden die genannten Polymere ihrerseits ausgewählt aus der Gruppe, bestehend aus Polyurethanen, Kunstharzen, Phthalaten, Acrylaten, Vinylharzen, Epoxyharzen, Nitrocellulose und Polyolefinen.

Bei der erfindungsgemäß bereitgestellten Flussmittelzusammensetzung liegt bevorzugterweise das Bindemittel in einem polaren oder nicht polaren Lösungsmittel dispergiert vor.

Das Flussmittel in der erfindungsgemäßen Flussmittelzusammensetzung ist bevorzugt ein Flussmittel auf der Basis eines Kaliumfluoaluminats, insbesondere auf der Basis von KₙAlFₘ mit 1 ≤ m ≤ 3 und 4 ≤ n ≤ 6. Das in der erfindungsgemäßen Flussmittelzusammensetzung enthaltene Flussmittel kann insbesondere elementaranalytisch eine Zusammensetzung mit einem Gehalt an K von 20 bis 45 %, an A1 von 10 bis 25 % und an F von 40 bis 60 % aufweisen.

Das bevorzugt in der erfindungsgemäßen Flussmittelzusammensetzung enthaltene Flussmittel liegt als Eutektikum vor, bevorzugt als Eutektikum mit einem Schmelzpunkt im Bereich von 562 °C bis 572 °C. Insbesondere handelt es sich bei dem in der erfindungsgemäßen Flussmittelzusammensetzung eingesetzten Flussmittel um NOCOLOK® oder ein anderes CAB-Flussmittel.

Bei einer bevorzugten Ausführungsform der erfindungsgemäßen Flussmittelzusammensetzung (sogenannter Flussmittellack) enthält die Zusammensetzung, bezogen auf die gesamte Flussmittelzusammensetzung, 15 bis 50 Gew.-%, bevorzugt 15 bis 45 Gew.-% Flussmittel, 0,1 bis 30 Gew.-%, bevorzugt 1 bis 25 Gew.-% Bindemittel in einem polaren oder nicht-polaren Lösungsmittel oder Lösungsmittelgemisch.

Die erfindungsgemäße Flussmittelzusammensetzung kann bevorzugt zum Herstellen beschichteter Formteile, insbesondere grifffest und handhabbar beschichteter Formteile auf der Basis von Aluminium oder Aluminiumlegierungen dienen. Insbesondere kann sie im Automobilbau verwendet werden. Beim Beschichten kann durch Anpassung der Rezeptur der Zusammensetzung die Schichtdicke und damit auch die Flussmittelmenge genau gesteuert werden. Hierbei ergibt sich der Vorteil, dass der Verbrauch an Flussmittel stark reduziert werden kann.

Bei einer besonders bevorzugten Ausführungsform enthält die erfindungsgemäße Flussmittelzusammensetzung des Weiteren mindestens 1 Gew.-%, bevorzugt 1 bis 20 Gew.-%, besonders bevorzugt 1 bis 10 Gew. % eines Thixotropiermittels. Hervorragend geeignet sind Thixotropiermittel auf der Basis von Gelatine und/oder Pektinen.

Die erfindungsgemäße Flussmittelzusammensetzung mit dem Thixotropiermittel wird in bevorzugter Weise mittels eines Verfahrens hergestellt, umfassend die Schritte, dass a) die Hälfte des Lösungsmittels zusammen mit dem Bindemittel und dem Thixotropiermittel vorgelegt wird, b) unter Rühren das Flussmittel zugegeben wird und c) im letzten Schritt der Rest des Lösungsmittels hinzugegeben wird. Es hat sich als besonders günstig für die Herstellung erwiesen, wenn die Reihenfolge der Schritte a), b) und c) eingehalten wird.

Die erfindungsgemäße Flussmittelzusammensetzung wird zum Herstellen mindestens teilweise beschichteter Formteile auf der Basis von Aluminium oder Aluminiumlegierungen verwendet, wobei von Rohteilen wie beispielsweise etwa Blechen oder Coils ausgegangen wird oder aber auch von bereits fertigen Formteilen.

Das erfindungsgemäße Verfahren zum Herstellen beschichteter Formteile, insbesondere beschichteter Formteile für den Automobilbau auf der Basis von Al und/oder Al-Legierungen unter Einsatz der erfindungsgemäßen Flussmittelzusammensetzung, umfasst den Schritt, dass ein Formteil mit der vorstehend erwähnten erfindungsgemäßen Flussmittelzusammensetzung beschichtet wird. Anschließend kann ergänzend eine Trocknung durchgeführt werden. Bevorzugt ist es, wenn wobei in einem weiteren Schritt das gebildete beschichtete Formteil bei einer Temperatur im Bereich von 15 °C bis 70 °C, stärker bevorzugt 25 °C bis 70 °C getrocknet wird.

Die so erzeugte Flussmittelschicht auf dem Formteil ist grifffest, damit sind die beschichteten Teile auch gut handhabbar und können, ohne dass die Schicht abbröckelte, transportiert werden. Trennwände für Sammler von Flachrohrkondensatoren etwa können geschüttet werden, ohne dass dabei wesentliche Mengen der Schicht abplatzten.

Im Lötofen zersetzen sich die polymeren Bestandteile des aufgebrachten Bindemittels zu niedermolekularen flüchtigen Bestandteilen, nach der Lötung sind - richtige Applikation und Schichtdicke vorausgesetzt - keine Rückstände mehr feststellbar. Vermutlich liegt dies daran, dass die bei der thermischen Zersetzung des Bindemittels entstehenden Verbindungen Restsauerstoff binden und so die Lötatmosphäre lokal verbessern.

Das mittels des vorstehend beschriebenen Verfahrens erhältliche, erfindungsgemäße beschichtete Formteil lässt sich anhand der nachfolgend beschriebenen Merkmale von Formteilen, die unter Heranziehung anderer Verfahren beschichtet wurden, unterscheiden, beispielsweise durch das Fehlen von Anhäufungen (beispielsweise im Rohr/Bodenbereich) im schlussendlich erhaltenen Flussmittelüberzug. Der Flussmittelüberzug auf dem beschichteten Formteil ist gleichmäßiger als bei anderen Verfahren. Außerdem wird bei der Lötung im Innenbereich das gesamte aufplattierte Lot aktiviert, die Lötmenisken, beispielsweise wasserseitig an der Steckgabelkupplung eines Heizkörpers, sind wesentlich stärker ausgebildet als bei Anwendung üblicher Verfahren. Im Innenbereich ergibt sich bei Einsatz des erfindungsgemäßen Verfahrens auf Grund des flächigen Flussmittelauftrags eine hellere, gleichmäßigere Fläche als bei üblichen Verfahren. Da außerdem bei Durchführung des erfindungsgemäßen Verfahrens die Flussmittelhaftung an der Al-Oberfläche bis zum Aufschmelzen sichergestellt ist, treten nicht Blindstellen infolge unzureichender Haftung der Flussmittelschicht und dadurch bedingter sichtbarer Verstärkung der Oxidschicht auf. Da außerdem das Bindemittel -richtige Anwendung vorausgesetzt- praktisch rückstandsfrei pyrolysiert, gibt es keine Kohlenstoffrückstände ("schwarze Flecken") wie bei Verwendung üblicher Flussmittelpasten auf Glykolbasis. Dies äußert sich auch - anders als bei derzeit gängigen Verfahren - durch eine gleichmäßigere Verteilung der Kohlenstoff-Spuren auf der ganzen Fläche, während übliche Verfahren diesbezüglich zu einer inhomogenen Verteilung führen.

Insofern stellt die Erfindung auch beschichtete Formteile mit einer von Anhäufungen freien Flussmittelbeschichtung bereit, die mittels des vorstehend genannten Verfahrens zum Herstellen beschichteter Formteile erhältlich sind, welches die Schritte umfasst, dass die vorstehend beschriebene erfindungsgemäße Flussmittelzusammensetzung auf einem Formteil aufgebracht wird und in einem weiteren Schritt getrocknet wird. In einem bevorzugten Fall erfolgt das Trocknen bei einer Temperatur im Bereich von 15 °C bis 70 °C, stärker bevorzugt im Bereich von 25 °C bis 70 °C.

Die so beschichteten Formteile auf der Basis von Al und/oder Al-Legierungen sind im Automobilbau verwendbar. Dabei werden in einem Hartlötverfahren, insbesondere einem Hartlötverfahren zum Herstellen verbundener Formteile auf der Basis von Aluminium oder Aluminiumlegierungen, wie vorstehend beschrieben, beschichtete Formteile hergestellt und mittels Hartlöten verbunden. Bevorzugt ist es, wenn bei diesem Hartlötverfahren das Verbinden mittels Hartlöten unter Erwärmen auf über 450 °C, bevorzugt auf über 560 °C erfolgt. Insbesondere werden mittels des erfindungsgemäßen Verfahrens beschichtete Formteile erhältlich und/oder mittels Hartlöten verbunden, wie sie bei der Motorkühlung verwendet werden.

Für bestimmte Anwendungszwecke, insbesondere beim direkten Beschichten von Rohteilen, beispielsweise von Coils oder Blechen, mit der erfindungsgemäßen Flussmittelzusammensetzung, ist das Thixotropiermittel eines auf der Basis von Gelatine und/oder Pektinen. Zu solchen Thixotropiermitteln auf der Basis von Gelatine und/oder Pektinen und/oder Acrylaten und/oder Polyurethanen zählen bevorzugt insbesondere solche Zusammensetzungen, die mindestens 1 Gew.-%, bevorzugt 1 bis 20 Gew.-%, besonders bevorzugt 1 bis 10 Gew.-% des Thixotropiermittels, Rest 15 bis 50 Gew.-%, bevorzugt 15 bis 45 Gew.-% an Flussmittel sowie 0,1 bis 30 Gew.- %, bevorzugt 5 bis 25 Gew.-% an Bindemittel in einem polaren oder nicht-polaren Lösungsmittel oder Lösungsmittelgemisch enthalten.

Es wird auch ein Verfahren zur Herstellung der vorstehend erwähnten thixotropiermittelhaltigen Flussmittelzusammensetzung in der bevorzugten erfindungsgemäßen Ausführungsform bereitgestellt, das die Schritte umfasst, dass a) die Hälfte des Lösungsmittels zusammen mit dem Bindemittel und dem Thixotropiermittel vorgelegt wird, b) unter Rühren das Flussmittel zugegeben wird und c) im letzten Schritt der Rest des Lösungsmittels hinzugegeben wird. Am stärksten bevorzugt ist es, wenn die vorstehend wiedergegebene Reihenfolge der Schritte eingehalten wird.

Beim Zusammengeben der vorstehend genannten Komponenten werden erfindungsgemäß das Flussmittel und das Bindemittel bei einer definierten Dissolverdrehzahl von 50 bis 900 Umdrehungen/min und unter Zusatz eines Thixotropiermittels gerade so stark dispergiert, dass die damit erzielte Beschichtung mit der Mischung von Flussmittel/Bindemittel/Thixotropiermittel/Lösungsmittel nach dem Trocknen offenporig als Basisbeschichtung vorliegt, was dazu führt, dass während des Lötprozesses die organischen Anteile wie Bindemittel und Thixotropiermittel über die Poren der Beschichtung ungehindert ausgasen können.

Mit der so erhaltenen Flussmittelzusammensetzung wird gemäß einer zweiten Variante des Verfahrens zum Herstellen beschichteter Formteile, insbesondere beschichteter Formteile für den Automobilbau auf der Basis von Al und/oder Al-Legierungen a) auf mindestens einem Teil eines Rohteils, insbesondere eines Rohteils auf der Basis von Aluminium oder Aluminiumlegierungen eine flussmittelhaltige Schicht, die die vorstehend erwähnte Flussmittelzusammensetzung mit dem Thixotropiermittel enthält, in einer Schichtdicke aufgetragen, dass die für das Hartlöten erforderliche Flussmittelmenge bereitgestellt wird, und b) das beschichtete Rohteil zu einem Formteil geformt.

Insbesondere wird die vorstehend beschriebene thixotropiermittelhaltige Flussmittelzusammensetzung bevorzugt durch übliche spritztechnische Verfahren aufgebracht.

Das vorstehend genannte Verfahren zum Herstellen beschichteter Formteile sollte bevorzugt im Schritt a) so geführt werden, dass die Schichtdicke, bezogen auf die Trockenschicht, auf 1 bis 20 µm, bevorzugt 5 bis 15 µm eingestellt wird. Es ist bevorzugt, wenn das beschichtete Rohteil nach Schritt a) bei Normaldruck bei einer Temperatur von unter 220 °C getrocknet wird. Zur Trocknung eignet sich besonders Infrarottrocknung, insbesondere mit mittelwelligen Strahlern, deren Emissionsmaximum bei der Absorption der Olefine liegt.

Die erfindungsgemäß bereitgestellte Flussmittelzusammensetzung in der bevorzugten thixotropiermittelhaltigen Ausführungsform wird bevorzugt zum Herstellen mindestens teilweise beschichteter Coils, insbesondere zum Herstellen von grifffest und handhabbar beschichteten Coils auf der Basis von Aluminium oder Aluminiumlegierungen eingesetzt, wie sie insbesondere im Automobilbau verwendet werden. Das in der Flussmittelzusammensetzung enthaltende Thixotropiermittel, bevorzugt ein Thixotropiermittel auf der Basis von Gelatine, Pektinen und/oder Polyurethanen erhöht die Haftfestigkeit der flussmittelhaltigen Schicht auf dem Rohteil. Die thixotropiermittelhaltige erfindungsgemäße Flussmittelzusammensetzung auf den Rohteilen zeigt nach dem Trocknen die vorstehend beschriebene offenporige Struktur. Hierbei kann davon ausgegangen werden, dass beim Trocknen das Thixotropiermittel zumindest teilweise durch die offenen Poren ausgast.

Das so erhaltene beschichtete Rohteil kann noch zusätzlich auf seiner Beschichtung mit einer hydrophob versiegelnden Schicht versehen sein. Die hydrophobe Versiegelung dient zum einen dem Transportschutz. Zum anderen dient sie dem Umformverfahrensschritt vom beschichteten Rohteil zum Formteil. Die versiegelnde Schicht ist gegenüber der darunterliegenden Schicht hydrophob und geht mit ihr nicht eine kraftschlüssige Verbindung ein. Somit ist eine Entfernung der Versiegelung möglich, ohne dass die darunterliegende Schicht betroffen wäre.

Bei dieser Variante des erfindungsgemäßen Verfahrens erfolgt die hydrophobe Versiegelung durch einen Verfahrensschritt wie etwa bevorzugt der Versiegelung durch physikalisch trocknende hydrophobe Bindemittel, insbesondere Polymere.

Die Entfernung der Versiegelung erfolgt beim Umformen durch physikalische Verfahren, insbesondere durch Abdampfen, Pyrolyse und/oder Extraktion mit einem Kohlenwasserstoff, insbesondere einem Olefin.

Die erfindungsgemäß bereitgestellte Flussmittelschicht weist durch Verwendung eines Thixotropiermittels die Vorteile auf, nämlich dass sie grifffest ist, die beschichteten Teile handhabbar sind und transportiert werden können, wobei die Schicht beim Transport nicht abbröckelt.

Die besonders bevorzugte Ausführungsform des erfindungsgemäßen Verfahrens, das heißt des Verfahrens, bei dem eine Flussmittelschicht und eine Versiegelungsschicht direkt auf einem Rohteil wie etwa einem Coil aufgetragen werden, weist darüber hinaus die Vorteile auf, dass geometrisch schwierige Teile, wie etwa Teile, die in Becherform vorliegen oder mit Hohlräumen versehen sind, vor dem Umformen mit einer Flussmittelschicht versehen werden können. Durch den 2-Schicht-Aufbau aus Versiegelungsschicht und flussmittelhaltiger Schicht wird auch der Werkzeugverschleiß minimiert. Des Weiteren bedeutet das Beschichten mit der Flussmittelzusammensetzung und einer leicht rein physikalisch entfernbaren Versiegelungsschicht, dass der in den Lötofen eingebrachte organische Anteil keinen Einfluss auf die Ofenatmosphäre ausübt und dass keine Crackprodukte auf der Metalloberfläche entstehen, die eine Lötung negativ beeinflussen könnten. Insbesondere beim umgeformten Mehrkammerrohr bringt eine Applikation des Flussmittels auf dem Coil beziehungsweise einem Teilstück davon bereits vor dem Umformen noch zusätzlich erhebliche Vorteile in Hinsicht auf die Prozesssicherheit und die Maßhaltigkeit der Rohre mit sich. Außerdem ist die direkte Beschichtung des Rohteils, in diesem speziellen Fall des Coils als flächiger Auftrag gleichmäßiger, ökonomischer und mit höherem Wirkungsgrad (80 bis 90 %) möglich als es bei der Beschichtung von Einzelteilen erst nach dem Umformprozess möglich ist.

Durch den Bezug von extern beschichteten Rohteilen wie den Coils in konstanter Qualität entfällt auch der Arbeitsgang des Aufbringens einer Flussmittelschicht. Die Fertigungslinien können mit erheblich geringerer Peripherie und damit auch bei erheblich geringeren Kosten betrieben werden. Die ständige, bereits vorstehend schon erwähnte Schmutzquelle der "Netzbefluxung" [der vorstehend erwähnten Variante a)] gemäß dem bisherigen üblichen Verfahren gemäß dem Stand der Technik entfällt ebenso wie auch die gesamte Flussmittellogistik. Hinzu kommt noch, dass bei der besonders bevorzugten Entfernung der Versiegelung unter Zuhilfenahme des Umformöles, das Umformöl gleichzeitig als Lösemittel verwendet werden kann. Ebenso ist eine Kreislaufführung des Umformöls mittels Destillation möglich. Ein noch verbleibender Restfilm kann dann durch Thermoentfettung entfernt werden.

Die Erfindung wird nachfolgend durch Beispiele noch detaillierter erläutert, die jedoch nicht einschränkend zu verstehen sind.

### Herstellungsbeispiel

### Herstellung des Flussmittellackes

- Gemischt wurden:
   PU-Bindemittel 300 ml
- VE-Wasser: 700 ml
- Diese Mischung wurde verrührt mit NOCOLOK-Flux (SOLVAY) 800 g
- 30 min mit einer Rührgeschwindigkeit von 200 min⁻¹ weiterrühren
- Filtrieren der Mischung über Edelstahlsieb mit einer Maschengröße von 250µm

Hieraus ergaben sich 1,8 kg gebrauchsfertige Mischung mit der nachfolgenden Zusammensetzung:

| | |
|---|---|
| Flussmittel: | 45 Gew.-% |
| PU-Binder: | 2,6 Gew.-% |
| Rest: | VE-Wasser |

### Anwendungsbeispiel

### Lackierparameter:

| | |
|---|---|
| V_{Kette}: | 0, 5 bis 4 m/min |
| V_{Oszill}: | ca. 30 m/min |
| Sprühabstand | 150 bis 350 mm |
| Düsenöffnung | 0,5 bis 1,2 mm |
| Strahlform: | Flachstrahl, Fächer, Öffnungswinkel ca. 60° |
| Materialdruck: | 0,5 bar |
| Zerstäuberdruck: | 2,5 bar |
| Trocknungstemperatur: | 50°C |

### Ergebnisse

Mit den Einstellungen von Anwendungsbeispiel 1 und der unter Herstellungsbeispiel 1 beschriebenen Beschichtungsmasse wurde ein Schichtgewicht (Trockenschicht) von 25 g/m² erreicht. Die gemessene Schichtdicke betrug durchschnittlich 15 µm.

## Patentansprüche

1. Hartlöt-Flussmittelzusammensetzung, enthaltend zumindest ein Flussmittel, ein Lösungsmittel, ein Bindemittel und ein Thixotropiermittel, **dadurch gekennzeichnet, dass** die Hartlöt-Flussmittelzusammensetzung als gerade so stark dispergierte Mischung vorliegt, dass sie offenporig trocknet, und dass das Bindemittel ein chemisch und/oder physikalisch trocknendes organisches, sich beim Hartlöten unter Erwärmen auf über 450°C hinsichtlich der polymeren Bestandteile zu niedermolekularen, flüchtigen Bestandteilen ohne Rückstände zersetzendes, aufgrund der thermischen Zersetzung entstehender Verbindungen Restsauerstoff bindendes Polyurethan ist.

2. Hartlöt-Flussmittelzusammensetzung nach Anspruch 1, wobei das Flussmittel ein zusatzkomponentenhaltiges Flussmittel ist.

3. Hartlöt-Flussmittelzusammensetzung nach Anspruch 2, wobei die Zusatzkomponente ein Metall, bevorzugt ein pulverförmiges Metall ist.

4. Hartlöt-Flussmittelzusammensetzung nach Anspruch 2 oder 3, wobei das Metall ausgewählt ist aus der Gruppe, bestehend aus Silicium und/oder Aluminium.

5. Hartlöt-Flussmittelzusammensetzung nach einem der vorhergehenden Ansprüche, wobei das Bindemittel in einem polaren oder nicht polaren Lösungsmittel dispergiert vorliegt.

6. Hartlöt-Flussmittelzusammensetzung nach einem der vorhergehenden Ansprüche, wobei die Flussmittelzusammensetzung 15 bis 50 Gew.-%, bevorzugt 15 bis 45 Gew.-% Flussmittel, 0,1 bis 30 Gew.-%, bevorzugt 1 bis 25 Gew.-% eines Bindemittels in einem polaren oder nicht-polaren Lösungsmittel oder Lösungsmittelgemisch enthält.

7. Hartlöt-Flussmittelzusammensetzung nach einem der vorhergehenden Ansprüche, wobei das Flussmittel ein Flussmittel auf der Basis eines Kaliumfluoaluminats, insbesondere auf der Basis von KₙAlFₘ mit 1 ≤ m ≤ 3 und 4 ≤ n ≤ 6 ist.

8. Hartlöt-Flussmittelzusammensetzung nach einem der vorhergehenden Ansprüche, wobei das Flussmittel eine Zusammensetzung, ermittelt mittels Elementaranalyse, von 20 bis 45 % K, 10 bis 25 % Al und 40 bis 60 % F aufweist.

9. Hartlöt-Flussmittelzusammensetzung nach einem der vorhergehenden Ansprüche, wobei das Flussmittel als Eutektikum, bevorzugt als Eutektikum mit einem Schmelzpunkt im Bereich von 562°C bis 572°C vorliegt.

10. Hartlöt-Flussmittelzusammensetzung nach einem der vorhergehenden Ansprüche, wobei die Flussmittelzusammensetzung des Weiteren mindestens 1 Gew.-%, bevorzugt 1 bis 20 Gew.-%, besonders bevorzugt 1 bis 10 Gew.-% eines Thixotropiermittels enthält.

11. Hartlöt-Flussmittelzusammensetzung nach Anspruch 10, enthaltend ein Thixotropiermittel auf der Basis von Gelatine und/oder Pektinen.

12. Verfahren zur Herstellung der Hartlöt-Flussmittelzusammensetzung nach einem der Ansprüche 10 oder 11 umfassend die Schritte, dass
a) die Hälfte des Lösungsmittels zusammen mit dem Bindemittel und dem Thixotropiermittel vorgelegt wird,
b) unter Rühren das Flussmittel zugegeben wird und
c) im letzten Schritt der Rest des Lösungsmittels hinzugegeben wird.

13. Verfahren nach Anspruch 12 wobei die Reihenfolge der Schritte a), b) und c) eingehalten wird.

14. Verwendung der Hartlöt-Flussmittelzusammensetzung nach einem der Ansprüche 1 bis 11 zum Herstellen beschichteter oder verbundener Formteile auf der Basis von Aluminium oder Aluminiumlegierungen.

15. Verwendung nach Anspruch 14, wobei die Hartlöt-Flussmittelzusammensetzung nach einem der Ansprüche 1 bis 11 auf die Formteile aufgebracht wird und ein Verbinden der beschichteten Formteile in einem Lötofen mittels Hartlöten unter Erwärmen auf über 450°C, bevorzugt auf über 560°C, zum Zersetzen der polymeren Bestandteile des aufgebrachten Bindemittels zu niedermolekularen flüchtigen Bestandteilen ohne Rückstände erfolgt und durch aufgrund der thermischen Zersetzung des Bindemittels entstehender Verbindungen Restsauerstoff gebunden wird.

16. Verwendung nach Anspruch 15, mit dem weiteren Schritt, dass die auf die Formteile aufgebrachte Hartlöt-Flussmittelzusammensetzung bei einer Temperatur im Bereich von 15°C bis 70°C, bevorzugt 25°C bis 70°C getrocknet wird.

17. Verwendung nach Anspruch 14 oder 15, wobei zur Herstellung der beschichteten Formteile auf der Basis von Aluminium oder Aluminiumlegierungen folgende Schritte erfolgen:
- Rohteile werden mit einer Hartlöt-Flussmittelzusammensetzung nach einem der Ansprüche 1 bis 11 beschichtet, wobei die Hartlöt-Flussmittelzusammensetzung zumindest ein Flussmittel, ein Lösungsmittel, ein Bindemittel und mindestens 1 Gew.-%, bevorzugt 1 bis 20 Gew.-%, besonders bevorzugt 1 bis 10 Gew.-% eines Thixotropiermittels enthält, und das Bindemittel ein chemisch und/oder physikalisch trocknendes organisches Polyurethan ist,
- die beschichteten Rohteile werden zu Formteilen geformt,
- anschließend werden die Formteile mittels Hartlöten verbunden, wobei das Verbinden der Formteile mittels Hartlöten unter Erwärmen auf über 450°C, bevorzugt auf über 560°C, zum Zersetzen der polymeren Bestandteile des aufgebrachten Bindemittels zu niedermolekularen flüchtigen Bestandteilen ohne Rückstände erfolgt und durch aufgrund der thermischen Zersetzung des Bindemittels entstehender Verbindungen Restsauerstoff gebunden wird.

## Claims

1. Hard-soldering flux composition containing at least a soldering flux, a solvent, a binder, and a thixotroping agent, **characterized in that** the hard-soldering flux composition is provided in the form of a mixture that is dispersed just strongly enough to dry in an open-pored manner, and **in that** the binder is an organic polyurethane that dries chemically and/or physically, has its polymeric components disintegrate without residues during hard-soldering by heating to more than 450°C to form low molecular, volatile components, and binds residual oxygen due to the thermal disintegration of compounds thus generated.

2. Hard-soldering flux composition according to claim 1, whereby the soldering flux is a soldering flux that contains an additive component.

3. Hard-soldering flux composition according to claim 2, whereby the additive component is a metal, preferably a powdery metal.

4. Hard-soldering flux composition according to claim 2 or 3, whereby the metal is selected from the group consisting of silicon and/or aluminum.

5. Hard-soldering flux composition according to any one of the preceding claims, whereby the binder is provided dispersed in a polar or non-polar solvent.

6. Hard-soldering flux composition according to any one of the preceding claims, whereby the soldering flux composition contains 15 to 50 % by weight, preferably 15 to 45 % by weight, soldering flux, 0.1 to 30 % by weight, preferably 1 to 25 % by weight, of a binder in a polar or non-polar solvent or solvent mixture.

7. Hard-soldering flux composition according to any one of the preceding claims, whereby the soldering flux is a soldering flux based on a potassium fluoaluminate, in particular based on KₙAlFₘ where 1 ≤ m ≤ 3 and 4 ≤ n ≤ 6.

8. Hard-soldering flux composition according to any one of the preceding claims, whereby the soldering flux comprises a composition, as determined by elementary analysis, made of 20 to 45 % K, 10 to 25 % Al, and 40 to 60 % F.

9. Hard-soldering flux composition according to any one of the preceding claims, whereby the soldering flux is provided in the form of a eutectic mixture, preferably as a eutectic mixture with a melting point in the range from 562°C to 572°C.

10. Hard-soldering flux composition according to any one of the preceding claims, whereby the soldering flux composition further contains at least 1 % by weight, preferably 1 to 20 % by weight, particularly preferred 1 to 10 % by weight, of a thixotroping agent.

11. Hard-soldering flux composition according to claim 10, containing a thixotroping agent based on gelatin and/or pectins.

12. Method for producing the hard-soldering flux composition according to any one of the claims 10 or 11 comprising the steps of
a) providing half of the solvent together with the binder and the thixotroping agent;
b) adding the soldering flux while stirring; and
c) adding the remainder of the solvent in the final step.

13. Method according to claim 12, whereby the sequence of steps a), b), and c) is maintained.

14. Use of the hard-soldering flux composition according to any one of the claims 1 to 11 for producing coated or bonded preforms based on aluminum or aluminum alloys.

15. Use according to claim 14, whereby the hard-soldering flux composition according to any one of the claims 1 to 11 is applied onto the preforms and bonding of the coated preforms in a soldering furnace by means of hard-soldering by heating to more than 450°C, preferably to more than 560°C, for disintegrating the polymeric components of the binder that has been applied to form low molecular volatile components with residues proceeds, and residual oxygen is bound by compounds that are produced due to the thermal disintegration.

16. Use according to claim 15, including the further step of drying the hard-soldering flux composition, which has been applied to the preforms, at a temperature in the range from 15°C to 70°C, preferably 25°C to 70°C.

17. Use according to claim 14 or 15, whereby the following steps proceed in order to produce the coated preforms based on aluminum or aluminum alloys:
- blanks are coated with a hard-soldering flux composition according to any one of the claims 1 to 11, whereby the hard-soldering flux composition contains at least a soldering flux, a solvent, a binder, and at least 1 % by weight, preferably 1 to 20 % by weight, particularly preferred 1 to 10 % by weight, of a thixotroping agent, and the binder is an organic polyurethane that dries chemically and/or physically;
- the coated blanks are formed into preforms;
- subsequently, the preforms are bonded by means of hard-soldering, whereby the bonding of the preforms proceeds by means of hard-soldering by heating to more than 450°C, preferably to more than 560°C, for disintegrating the polymeric components of the binder that has been applied to form low molecular volatile components without residues, and residual oxygen is bound by compounds that are produced due to the thermal disintegration of the binder.

## Revendications

1. Composition de fondant pour brasage fort contenant au moins un fondant, un solvant, un liant et un agent thixotrope, **caractérisée en ce que** la composition de fondant pour brasage fort est présente en tant que mélange dispersé de manière aussi forte qu'il sèche à pores ouverts, et que le liant est un polyuréthane organique séchant par voie chimique et/ou physique, se décomposant lors du brasage fort en chauffant à plus de 450°C en ce qui concerne les constituants polymères en des constituants volatiles de faible poids moléculaire sans résidus, fixant l'oxygène résiduel en raison de la décomposition thermique des composés apparus.

2. Composition de fondant pour brasage fort selon la revendication 1, dans laquelle le fondant est un fondant contenant un composant supplémentaire.

3. Composition de fondant pour brasage fort selon la revendication 2, dans laquelle le composant supplémentaire est un métal, de préférence un métal pulvérulent.

4. Composition de fondant pour brasage fort selon la revendication 2 ou 3, dans laquelle le métal est sélectionné parmi le groupe constitué du silicium et/ou de l'aluminium.

5. Composition de fondant pour brasage fort selon l'une quelconque des revendications précédentes, dans laquelle le liant est présent dispersé dans un solvant polaire ou non polaire.

6. Composition de fondant pour brasage fort selon l'une quelconque des revendications précédentes, dans laquelle la composition de fondant contient 15 à 50 % en poids, de préférence 15 à 45 % en poids de fondant, 0,1 à 30 % en poids, de préférence 1 à 25 % en poids d'un liant dans un solvant ou mélange de solvants polaire ou non polaire.

7. Composition de fondant pour brasage fort selon l'une quelconque des revendications précédentes, dans laquelle le fondant est un fondant à base d'un fluoaluminate de potassium, notamment à base de KₙAlFₘ avec 1 ≤ m ≤ 3 et 4 ≤ n ≤ 6.

8. Composition de fondant pour brasage fort selon l'une quelconque des revendications précédentes, dans laquelle le fondant présente une composition, déterminée au moyen d'une analyse élémentaire, de 20 à 45 % de K, 10 à 25 % de Al et 40 à 60 % de F.

9. Composition de fondant pour brasage fort selon l'une quelconque des revendications précédentes, dans laquelle le fondant est présent en tant que système eutectique, de préférence en tant que système eutectique avec un point de fusion dans la plage de 562°C à 572°C.

10. Composition de fondant pour brasage fort selon l'une quelconque des revendications précédentes, dans laquelle la composition de fondant contient en outre au moins 1 % en poids, de préférence 1 à 20 % en poids, de manière particulièrement préférée 1 à 10 % en poids d'un agent thixotrope.

11. Composition de fondant pour brasage fort selon la revendication 10, contenant un agent thixotrope à base de gélatine et/ou de pectines.

12. Procédé pour la fabrication de la composition de fondant pour brasage fort selon l'une quelconque des revendications 10 ou 11 comprenant les étapes selon lesquelles
a) la moitié du solvant est présente avec le liant et l'agent thixotrope,
b) le fondant est ajouté sous agitation et
c) dans la dernière étape, le reste du solvant est ajouté.

13. Procédé selon la revendication 12, dans lequel la succession des étapes a), b) et c) est respectée.

14. Utilisation de la composition de fondant pour brasage fort selon l'une quelconque des revendications 1 à 11 pour la fabrication de pièces moulées enduites ou connectées à base d'aluminium ou d'alliages d'aluminium.

15. Utilisation selon la revendication 14, dans laquelle la composition de fondant pour brasage fort selon l'une quelconque des revendications 1 à 11 est appliquée sur les pièces moulées et une connexion des pièces moulées enduites a lieu dans un four à braser au moyen de brasage fort en chauffant à plus de 450°C, de préférence à plus de 560°C, pour la décomposition des constituants polymères du liant appliqué en des constituants volatiles de faible poids moléculaire sans résidus et l'oxygène résiduel est fixé par les composés apparus en raison de la décomposition thermique du liant.

16. Utilisation selon la revendication 15, avec l'étape supplémentaire selon laquelle la composition de fondant pour brasage fort appliquée sur les pièces moulées est séchée à une température dans la plage de 15°C à 70°C, de préférence 25°C à 70°C.

17. Utilisation selon la revendication 14 ou 15, dans laquelle les étapes suivantes ont lieu pour la fabrication des pièces moulées enduites à base d'aluminium ou d'alliages d'aluminium :
- des pièces brutes sont enduites avec une composition de fondant pour brasage fort selon l'une quelconque des revendications 1 à 11, dans laquelle la composition de fondant pour brasage fort contient au moins un fondant, un solvant, un liant et au moins 1 % en poids, de préférence 1 à 20 % en poids, de manière particulièrement préférée 1 à 10 % en poids d'un agent thixotrope, et le liant est un polyuréthane organique séchant par voie chimique et/ou physique,
- les pièces brutes enduites sont moulées en des pièces moulées,
- les pièces moulées sont ensuite connectées au moyen de brasage fort, dans laquelle la connexion des pièces moulées a lieu au moyen de brasage fort en chauffant à plus de 450°C, de préférence à plus de 560°C, pour la décomposition des constituants polymères du liant appliqué en des constituants volatiles de faible poids moléculaire sans résidus et l'oxygène résiduel est fixé par les composés apparus en raison de la décomposition thermique du liant.
